# EUROPEAN PATENT SPECIFICATION

(11) **EP 2 463 185 B1**
(45) Date of publication and mention of the grant of the patent: **05.06.2013**
(21) Application number: 10194135.9
(22) Date of filing: 08.12.2010
(51) Int. Cl.: B62J 9/00

(54) **Detachable carrier support member for bicycle cargo racks**
Abnehmbares Trägerstützelement für Fahrradgepäckträger
Elément de support détachable pour bâtis de chargement de bicyclettes

(43) Date of publication of application: 13.06.2012
(73) Proprietor: General Cycle Co., Taichung, Dali City, Taipei (TW)
(72) Inventor: Shih, William, Dali City Taipei (TW)
(74) Representative: Viering, Jentschura & Partner

(56) References cited:
- DE-A1- 4 429 075
- JP-A- 8 230 737
- JP-A- 2001 354 178

## Description

### BACKGROUND OF THE INVENTION

### 1. Field of the Invention:

The present invention relates to a detachable carrier support member for bicycle cargo racks which allows users to attach the carrier on to or detach the carrier from the bicycle cargo rack easily according to their needs, thereby increase the efficiency.

### 2. Description the Prior Art:

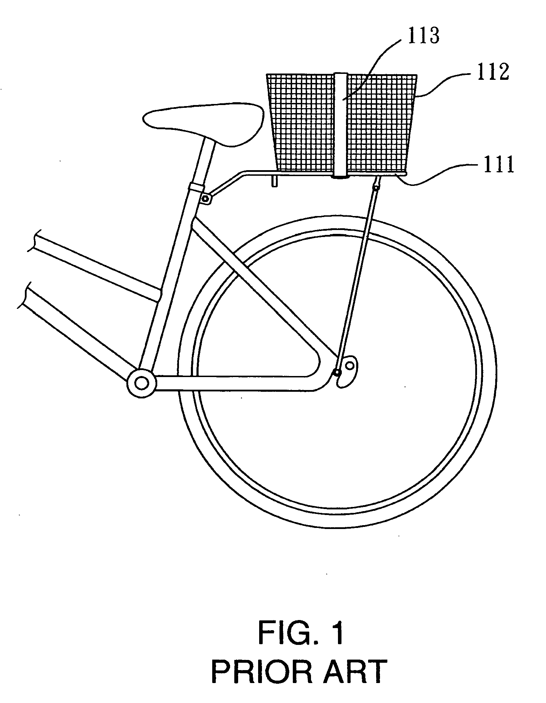

Referring to Fig. 1, the existing bicycle cargo rack 111 often requires a rope 113 to tie up and secure the carrier 112 (a basket, bag, or box etc.) thereon or to fixedly join the carrier 112 to the bicycle cargo rack 111 by a fixing device.

In view of the foregoing methods, there exist the following disadvantages:
(1) The carrier 112 that is being tied to the bicycle cargo rack 111 by the rope 113 is very likely to fall out of the bicycle cargo rack 111 owing to a loose tie, and therefore damages the objects inside the carrier.
(2) The rope 113 is only required when there's a need of tying, thus if not stored properly, it is likely that the users will be having trouble finding the rope 113 once it is needed.
(3) If to fixedly join the carrier 112 to the bicycle cargo rack 111, once the users want to replace it with a different kind of carrier 112 (say, to replace a basket with a bag) or to remove it from the bicycle cargo rack 111, the detachment of the carrier 112 alone requires a lot of time and therefore is inconvenient.
(4) As the carrier 112 of the bicycle cargo rack 111 is loaded with heavy object, the object may slide and fall out of the carrier when the bicycle passes a turning point and tilts to one side, especially when with the tie is loose.

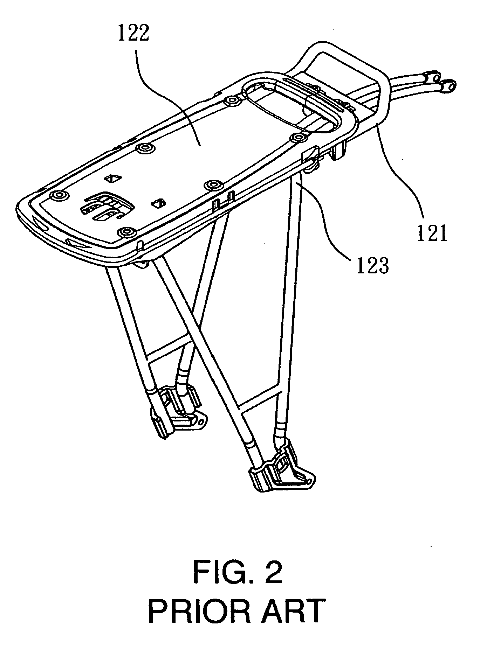

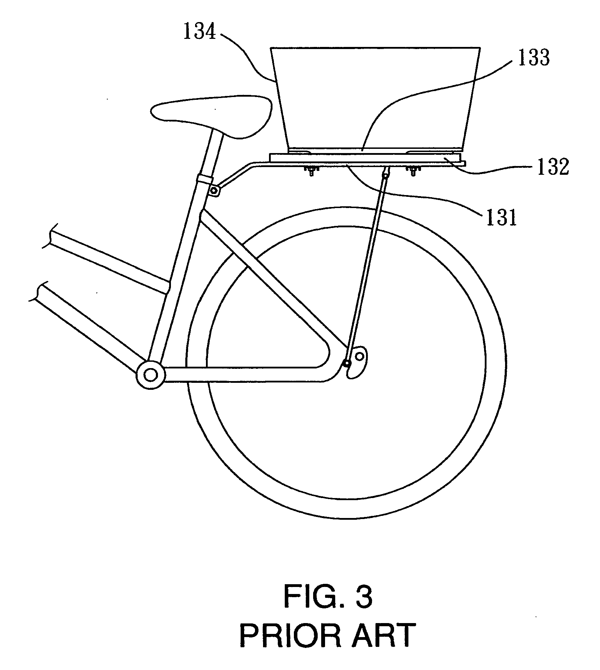

To solve the foregoing problems, some manufacturers provide a retaining board 122 fixedly joined to the bicycle cargo rack 121, as illustrated in Fig. 2, to increase the supporting surface thereof; some other manufacturers further provide a supporting board 133 fixedly joined to the bottom of the carrier 134, as illustrated in Fig. 3, wherein the supporting board 133 works with the buckle structure disposed on the retaining board 132 to allow users to conveniently attach or detach the carrier 134.

However, the foregoing methods shown as in Figs. 2 and 3 still exist the following disadvantages:
(1) Since the bicycle cargo racks on the market are not of the same width, the one-size retaining board 122 or 132 cannot fit the requirement of all different brands or models. As for the manufacturers, to produce different models to fit with all variations available on the market not only requires large storage space but also increases cost burden. Hence, the manufacturers are only capable of producing a few models that are more commonly used to meet the market's need; however, said products still fail to meet all standards of the existing bicycle cargo rack models.
(2) The retaining board is locked to the support bar 123 of the bicycle cargo rack; however, owing to the different support bar 123 diameters of different bicycle brands or models, the connection between the retaining board and the support bar 123 is therefore often insecure.
(3) Once the retaining board is fixedly joined to the bicycle cargo rack, said retaining board takes up all space available for hanging other bags, and thus limits the carrying capacity of the bicycle.

A detachable carrier support member for bicycle cargo racks is also known from German patent application DE 44 29 075 A1 which represents the closest prior art, includes a base plate, that is attached to a bicycle cargo rack using attachment means. Further an adapter element is provided which is connected to a carrier using a perforated plate ring. Furthermore, engaging elements are provided to couple the base plate with the adapter element for enabling the carrier to be attached to the bicycle cargo rack.

### SUMMARY OF THE INVENTION

In order to overcome the deficiencies of the preceding prior art, an object of the present invention is to provide a detachable carrier support member for bicycle cargo racks which allows users to attach the carrier on to or detach the carrier from the bicycle cargo rack easily according to their needs, thereby increase the efficiency.

With the above object in mind, the present invention provides a detachable carrier support member for bicycle cargo racks according to claim 1. Further embodiments of the invention are described in the dependent claims.

The base plate of the present invention is a part of the bottom section of the carrier or an independent plate that is locked to the bottom section of the carrier.

### BRIEF DESCRIPTION OF THE DRAWINGS

Fig. 1 is a schematic view of a prior art of the bicycle cargo racks;
Fig. 2 is a perspective view of a prior art of the bicycle cargo racks;
Fig. 3 is a schematic view of another prior art of the bicycle cargo racks;
Fig. 4 is an exploded perspective view according to the present invention;
Fig. 5 is a perspective view of the base plate according to the present invention;
Fig. 6 is a perspective view of the lateral frame rack according to the present invention;
Fig. 7 is an assembled view of the clamping block sets according to the present invention;
Fig. 8 is an assembled perspective view according to the present invention;
Fig. 9 is an assembled plan view according to the present invention;
Fig. 10 is a sectional view according to the I-I line of Fig. 9 of the present invention;
Fig. 11 is a sectional view according to the II-II line of Fig. 9 of the present invention;
Fig. 12 is a first sectional view according to the III-III line of Fig. 9 of the present invention;
Fig. 13 is a second sectional view according to the III-III line of Fig. 9 of the present invention; and

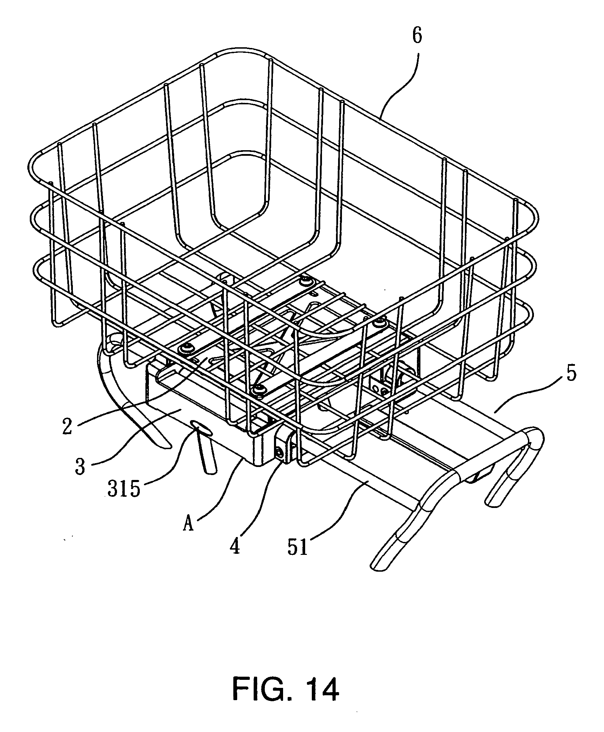

Fig. 14 is a perspective view according to the embodiment of the present invention.

### DESCRIPTION OF THE PREFERRED EMBODIMENTS

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

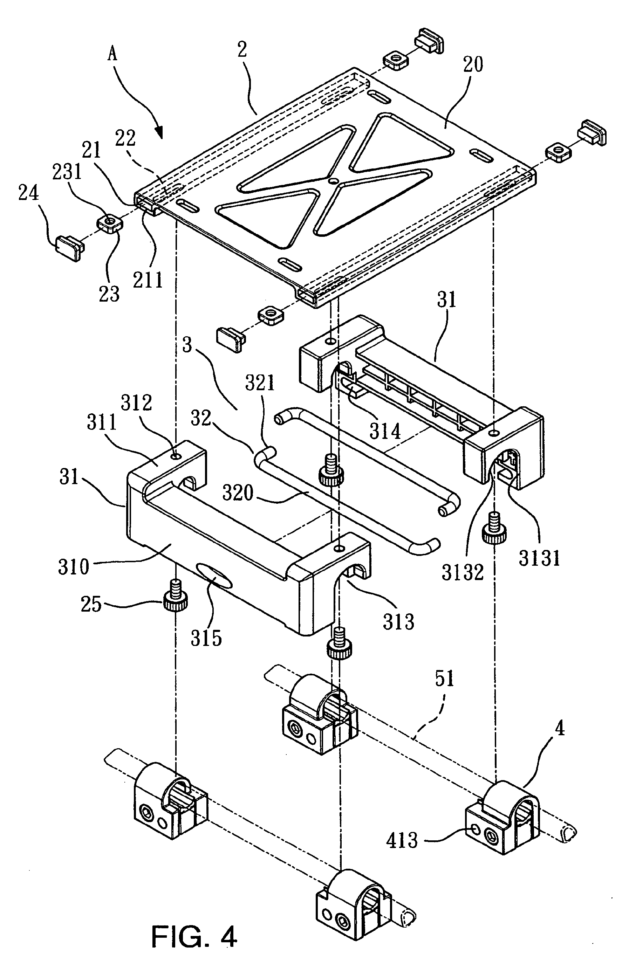

Referring to Figs. 4-7, the detachable carrier support member for bicycle cargo racks A according to the present invention comprises a base plate 2, a frame rack set 3, and a plurality of clamping block sets 4. The base plate 2 is fixedly joined to the bottom of a carrier 6, wherein the bottom of the base plate 2 is attached to the frame rack set 3. Further, the base plate 2 is secured on a fixed position by the plurality of clamping block sets 4 that clamps and holds on to a support bar 51 of a bicycle cargo rack 5.

The base plate 2 consists of a plate body 20, wherein a sliding groove 21 is disposed at each of the two sides of the plate body 20 respectively. The sliding groove 21 provides at least one slot aperture 22 and contains at least one sliding block 23, wherein the sliding block 23 has a threaded hole 231. A fixing bolt 25 penetrates the slot aperture 22 and screw lock with the threaded hole 231 of the sliding block 23. A plug cap 24 is inserted into each of two ends of the sliding groove 21.

The frame rack set 3 comprises parts described hereinafter.

Two control shafts 32, each comprises a shaft body 320 whereon vertically extends two shaft ends 321; and

Two lateral frame racks 31, each provides an opening 315 on its outside surface 310 and a retaining part 311 on each of its two lateral side surfaces. Said retaining part 311 provides a hole 312 on its top surface and a wedging groove 313, wherein the clamping block set 4 is capable of being inserted into the wedging groove 313. Said retaining part 311 further provides a clamping groove 314 on the inner surface, wherein the two clamping grooves 314 on the said two retaining parts 311 of the two lateral frame racks 31 thereby form a space in between to contain and hold the control shaft 32. The position of the control shaft 32 is further limited by at least one flexible buckle 316 disposed on the interior surface 317 of the lateral frame rack 31, wherein the flexible buckle 316 is placed in between the two clamping grooves 314 and close to the opening 315.

The clamping block set 4 fixedly joined to the support bar 51 of the bicycle cargo rack 5 comprises parts described hereinafter.

A clamping base 41 which is a receiving space 411 facing downwards and provides a first bolt bore 412 and a first shaft end retaining aperture 413 at each of two side surfaces 410 thereof.

A locking nut 42 and a locking bolt 43, wherein the locking nut 42 penetrates the first bolt bore 412 to lock with the locking bolt 43.

A fixing component 44 and a flexible pad body 45, both set inside the receiving space 411 of the clamping block set 4; wherein a threaded hole 442 is disposed on the top surface of the fixing component 44 to allow a tightening bolt 443 to be screw locked thereon and further compresses the flexible pad body 45 to attach to the support bar 51. A fixing block 441 of the fixing component 44 is laterally disposed of a second bolt bore 444 and a second shaft end retaining aperture 445, wherein the second bolt bore 444 is corresponding to the first bolt bore 412 to allow the locking nut 42 to penetrate thereof and the second shaft end retaining aperture 445 is corresponding to the first shaft end retaining aperture 413 to allow the shaft end 321 of the control shaft 32 to insert therein.

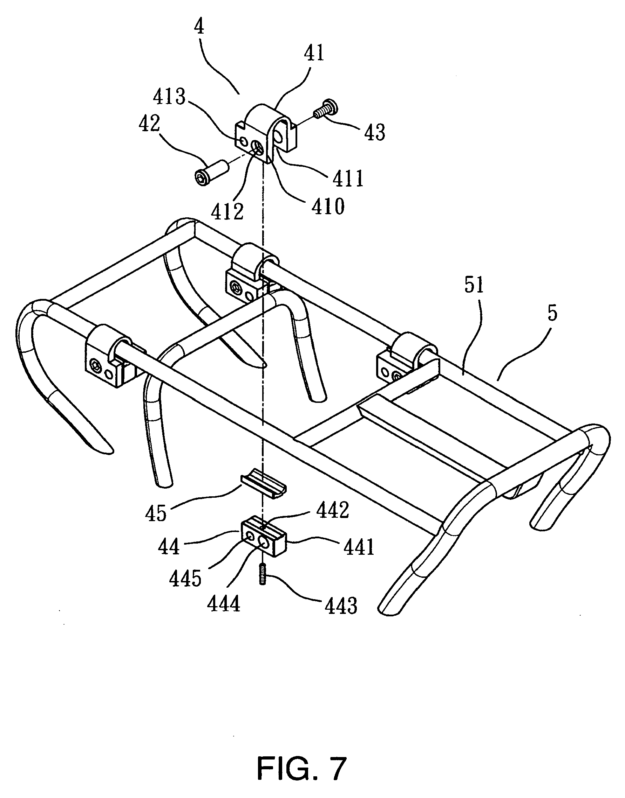

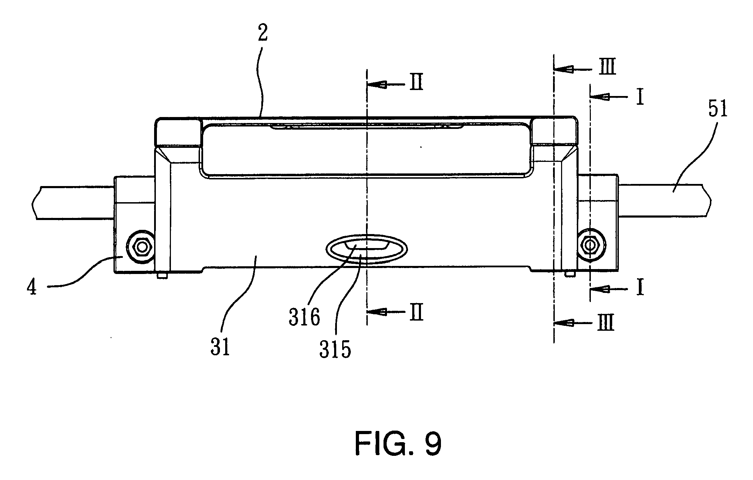

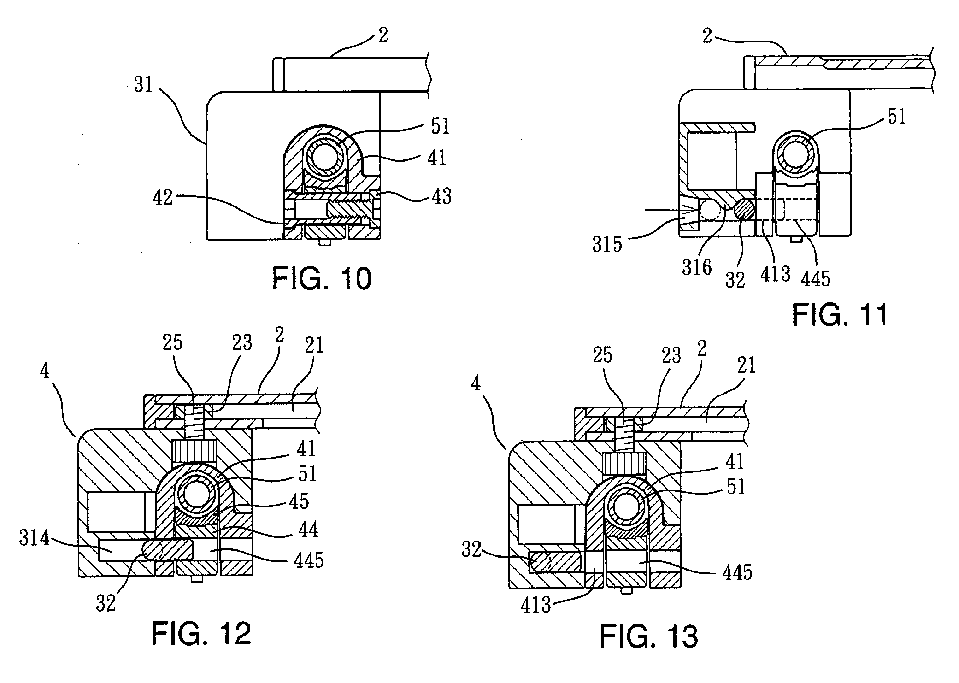

Referring to Figs. 7-9, by assembling the foregoing assemblies, the present invention is able to connect with the bicycle cargo rack 5. Locks the clamping base 41 of the clamping block set 4 to the support bar 51, then place the flexible pad body 45 and the fixing component 44 into the receiving space 411 respectively. And then, penetrates the first and the second bolt bores 412 and 444 with the locking nut 42, wherefrom the locking nut 42 further locks with the locking bolt 43 as illustrated in Fig. 10. The threaded hole 442 is screw locked to the tightening bolt 443 and further compresses the flexible pad body 45 to attach to the support bar 51. For assembling, two of the clamping block sets 4 are to be disposed at each side of the bicycle cargo rack 5, wherein the clamping block set 4 each correspond to the other, and their intervals are to be the same with the intervals between the lateral frame rack 31 and the two wedging grooves 313 of the retaining parts 311, such that the frame rack set 3 is capable of attaching to or detaching from the clamping block set 4 thereof.

The base plate 2 of the present invention is a part of the bottom section of the carrier 6 or an independent plate 2 that is locked to the bottom section of the carrier 6.

Further, to assemble the frame rack set 3, place the two control shafts 32 into the clamping grooves 314 of the two lateral frame racks 31, and penetrates the hole 312 and the slot aperture 22 with the fixing bolt 25, wherefrom the fixing bolt 25 screw locks with the threaded hole 231 of the sliding block 23. The reserved space of the slot aperture 22 allows the present invention to adjust its interval with the cargo rack 5 and the corresponding clamping block sets 4. The installation preparation is thereby completed after fastening the fixing bolt 25 and hence the present invention is applicable to different bicycle models with different cargo racks 5 widths.

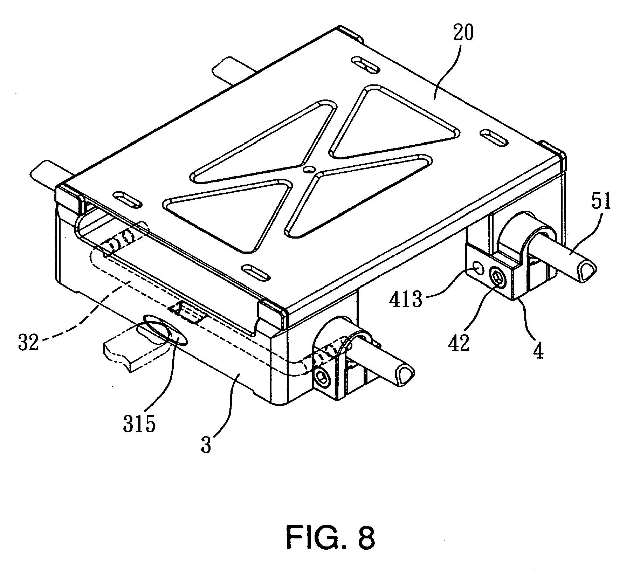

To attach the carrier 6 to the bicycle cargo rack 5, embed the clamping block set 4 into the wedging groove 313 of the lateral frame rack 31 and through the opening 315, insert a finger to push the control shaft 32 inwards until it cross the flexible buckle 316, allowing the shaft end 321 to penetrates the first shaft end retaining aperture 413 and the second shaft end retaining aperture 445 and thus forms a brake thereon and secures the carrier 6 to the cargo rack 5, as illustrated in Figs. 11 and 12. Referring to Figs. 8, 9 and 11, the foregoing flexible buckle 316 is made of elastic material and therefore is capable of contracting to allow the control shaft 32 to pass through and recovering to the original place to limit the position of the control shaft 32 after it has passed.

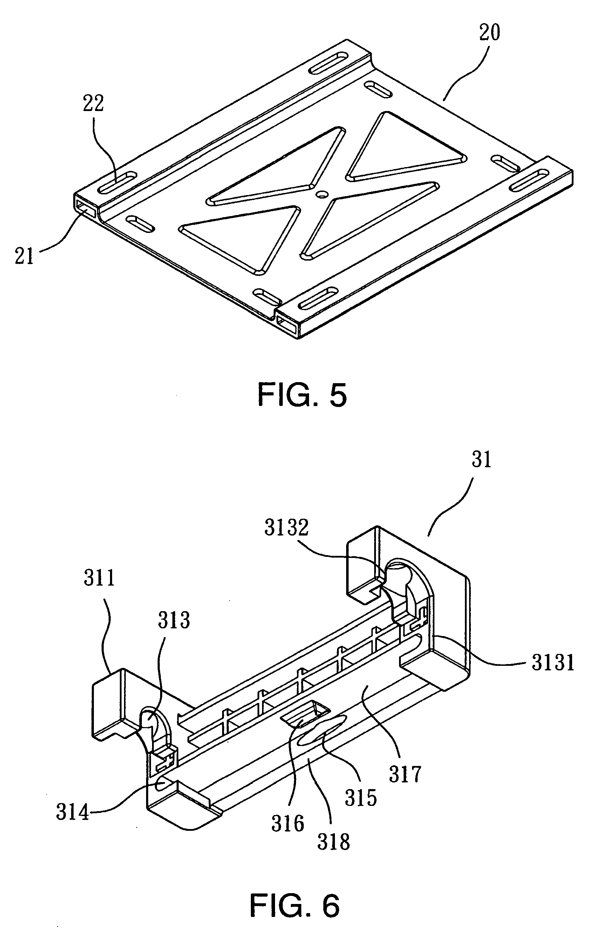

To detach the carrier 6 from the bicycle cargo rack 5, insert a finger into the bottom side 318 of the lateral frame rack 31 to pull the control shaft 32 outwards, freeing the shaft end 321 from the first shaft end retaining aperture 413 and the second shaft end retaining aperture 445 and therefrom disengage the position limitation, as illustrated in Figs. 6 and 13, and the carrier is hence detachable from the cargo rack 5.

The clamping block set 4 is fixedly joined to the support bar 51 of the bicycle car rack 5, wherein the flexible pad body 45 disposed inside the receiving space 411 of the clamping block set 4, with the help of the locked locking nut 42 and the locking bolt 43, is capable of preventing the clamping block set 4 from sliding forwards and backwards. Wherein, with the tightening bolt 443 vertically compressing the flexible pad body 45, the clamping block set 4 is further prevented from laterally twisting.

The wedging groove 313 of the lateral frame rack 31 is of the design that an outside edge 3131 is vertically disposed and is longer than an inner side edge 3132. The two corresponding lateral frame racks 31 are fixedly joined to the two sides of the bicycle car go rack 5 respectively, and the two outside edges 3131 are vertically disposed to assist in the connection of the two lateral frame racks 31, therefrom being able to secure the position of the carrier 6 and prevent it from dropping when the bicycle makes turns at road corners.

As the foregoing, the present invention provides a detachable carrier support member for bicycle cargo racks which allows users to attach the carrier on to or detach the carrier from the bicycle cargo rack easily according to their needs, thereby increase the efficiency.

## Claims

1. A detachable carrier support member for bicycle cargo racks (A), comprising a base plate (2), a frame rack set (3) and a plurality of clamping block sets (4), wherein:
the base plate (2) consists of a plate body (20) with a sliding groove (21) disposed at each of the two sides of the plate body (20) respectively, and the sliding groove (21) provides at least one slot aperture (22) at the bottom side surface thereof and contains at least one sliding block (23) with a threaded hole (231) to allow a fixing bolt (25) to penetrate the slot aperture (22) and screw lock with the threaded hole (231) of the sliding block (23);
the frame rack set (3) attached to the bottom of the base plate (2) comprises:
two control shafts (32), each comprises a shaft body (320) whereon vertically extends two shaft ends (321); and
two lateral frame racks (31), each provides a retaining part (311) on each of its two lateral side surfaces, wherein the retaining part (311) provides a hole (312) on the top surface and a wedging groove (313) to allow the clamping block set (4) to insert therein; a clamping groove (314) is further provided by the retaining part (311) on the inner surface, wherein the two clamping grooves (314) on the two retaining parts (311) of the two lateral frame racks (31) thereby form a space in between to contain and hold the control shaft (32);
the position of the control shaft (32) is therefrom limited by at least one flexible buckle (316) disposed at the interior surface (317) of the lateral frame rack (311); and
the clamping block sets (4) used to secure the base plate (2) to a fixed position by clamping and holding on to a support bar (51) of a bicycle cargo rack (5), comprising:
a clamping base (41) being a receiving space (411) facing downwards, providing a first bolt bore (412) and a first shaft end retaining aperture (413) at each of two side surfaces (410) thereof, and a locking nut (42) therefrom penetrates the first bolt bore (412) to lock with a locking bolt (43);
a flexible pad body (45) set inside the receiving space (411) of the clamping block set (4);
a fixing component (44) disposed inside the receiving space (411) of the clamping block set (4), and a second bolt bore (444) and a second shaft end retaining aperture (445) are disposed thereon, the second bolt bore (444) is corresponding to the first bolt bore (412) to allow the locking nut (42) to penetrate thereof and the second shaft end retaining aperture (445) is corresponding to the first shaft end retaining aperture (413) to allow the shaft end (321) of the control shaft (32) to insert therein.

2. The detachable carrier support member for bicycle cargo racks (A) as defined in claim 1, wherein a plug cap (24) is inserted into each of two ends of the sliding groove (21).

3. The detachable carrier support member for bicycle cargo racks (A) as defined in claim 1, wherein the flexible buckle (316) is placed in between the two clamping grooves (314).

4. The detachable carrier support member for bicycle cargo racks (A) as defined in claim 1, wherein the base plate (2) is fixedly joined to the bottom of the carrier(6).

5. The detachable carrier support member for bicycle cargo racks (A) as defined in claim 1, wherein the base plate (2) is a part of the bottom section of the carrier (6).

6. The detachable carrier support member for bicycle cargo racks (A) as defined in claim 1, wherein the two lateral frame racks (31) each provides an opening (315) on the outside surface (310).

7. The detachable carrier support member for bicycle cargo racks (A) as defined in claim 1, wherein a threaded hole (442) is disposed on the top surface of the fixing component (44) to allow a tightening bolt (443) to be screw locked thereon and further compresses the flexible pad body (45) to attach to the support bar (51).

## Patentansprüche

1. Ein Abnehmbarer-Träger-Stützelement für Fahrradgepäckträger (A), aufweisend eine Basisplatte (2), einen Rahmengestell-Satz (3) und eine Mehrzahl von Klemmblock-Sätzen (4), wobei:
die Basisplatte (2) aus einem Plattenkörper (20) mit einer Schiebe-Nut (21) besteht, welche jeweilig an jeder der zwei Seiten des Plattenkörpers (20) angeordnet ist, und die Schiebe-Nut (21) wenigstens eine Schlitzöffnung an der Unterseitenfläche davon bereitstellt und wenigstens einen Schiebe-Block (23) mit einem Gewindeloch (231) aufnimmt, um es einem Fixierbolzen (25) zu ermöglichen, durch die Schlitzöffnung (22) zu dringen und mit dem Gewindeloch (231) des Schiebe-Blocks (23) im Schraubeingriff zu stehen,
der Rahmengestell-Satz (3), welcher an die Unterseite der Basisplatte (2) angebracht ist, aufweist:
zwei Steuerschäfte (32), von denen jeder einen Schaftkörper (320) aufweist, von welchen aus sich zwei Schaftenden (321) vertikal erstrecken, und
zwei seitliche Rahmengestelle (31), von denen jedes einen Halteteil (311) auf jeder seiner zwei seitlichen Seitenflächen bereitstellt, wobei der Halteteil (311) ein Loch (312) auf der oberen Fläche und eine Klemm-Nut (313) bereitstellt, um es dem Klemmblock-Satz (4) zu erlauben, sich darin einzusetzen, wobei ferner eine Klemm-Nut (314) durch den Halteteil (311) an der inneren Fläche bereitgestellt ist, wobei die zwei Klemm-Nuten (314) an den zwei Halteteilen (311) der zwei seitlichen Rahmengestelle (31) dadurch einen Raum dazwischen ausbilden, um den Steuerschaft (32) aufzunehmen und zu halten, wobei die Position des Steuerschafts (32) daher durch wenigstens eine flexible Beule (316) beschränkt ist, welche an der inneren Fläche (317) des seitlichen Rahmengestells (311) angeordnet ist, und
wobei die Klemmblock-Sätze (4), welche verwendet werden, um die Basisplatte (2) an einer fixen Position durch Festklemmen und durch Festhalten an einer Stützstange (51) eines Fahrradgepäcksträgers (5) zu befestigen, aufweisen:
eine Klemm-Basis (41), welche ein Aufnahmeraum (411) ist, welcher nach unten gewandt ist, welche ein erstes Bolzenbohrloch (412) und eine erste Schaftende-Halteöffnung (413) an jeder der zwei seitlichen Flächen (410) davon bereitstellt, und wobei eine Arretiermutter (42) davon das erste Bolzenbohrloch (412) durchdringt, um mit einem Arretierbolzen (43) im Eingriff zu stehen,
einen flexiblen Auflagekörper (45), welcher innerhalb des Aufnahmeraums (411) des Klemmblock-Satzes (4) eingesetzt ist,
ein Fixierbauteil (44), welches innerhalb des Aufnahmeraums (411) des Klemmblock-Satzes (4) angeordnet ist, und wobei ein zweites Bolzenbohrloch (444) und eine zweite Schaftende-Halteöffnung (445) daran angeordnet sind, wobei das zweite Bolzenbohrloch (444) zu dem ersten Bolzenbohrloch (412) korrespondiert, um es der Arretiermutter (42) zu erlauben, davon aus zu durchdringen, und die zweite Schaftende-Halteöffnung (445) zu der ersten Schaftende-Halteöffnung (413) korrespondiert, um es dem Schaftende (321) des Steuerschafts (32) zu erlauben, sich darin einzusetzen.

2. Das Abnehmbarer-Träger-Stützelement für Fahrradgepäckträger (A) gemäß Anspruch 1, wobei eine Verschlusskappe (24) in jedes von zwei Enden der Schiebe-Nut (21) eingebracht ist.

3. Das Abnehmbarer-Träger-Stützelement für Fahrradgepäckträger (A) gemäß Anspruch 1, wobei die flexible Beule (316) zwischen den zwei Klemm-Nuten (314) angeordnet ist.

4. Das Abnehmbarer-Träger-Stützelement für Fahrradgepäckträger (A) gemäß Anspruch 1, wobei die Basisplatte (2) fest mit der Unterseite des Trägers (6) verbunden ist.

5. Das Abnehmbarer-Träger-Stützelement für Fahrradgepäckträger (A) gemäß Anspruch 1, wobei die Basisplatte (2) ein Teil des unteren Abschnitts des Trägers (6) ist.

6. Das Abnehmbarer-Träger-Stützelement für Fahrradgepäckträger (A) gemäß Anspruch 1, wobei jedes von den zwei seitlichen Rahmengestellen (31) eine Öffnung (315) an der Außenfläche (310) bereitstellt.

7. Das Abnehmbarer-Träger-Stützelement.für Fahrradgepäckträger (A) gemäß Anspruch 1, wobei ein Gewindeloch (442) an der oberen Fläche des Fixierbauteils (44) angeordnet ist, um es einem Anziehbolzen (443) zu erlauben, damit im Schraubeingriff zu stehen und den flexiblen Auflagekörper (45) zur Befestigung an der Stützstange (51) weiter zusammenzudrücken.

## Revendications

1. Elément de support détachable pour bâtis de chargement de bicyclettes (A), comprenant une plaque de base (2), un ensemble de bâti (3) et une pluralité d'ensembles de bloc de serrage (4), dans lequel :
la plaque de base (2) se compose d'un corps de plaque (20) avec une rainure de coulissement (21) disposée au niveau de chacun des deux côtés du corps de plaque (20) respectivement, et la rainure de coulissement (21) fournit au moins une ouverture de fente (22) au niveau de sa surface latérale inférieure et contient au moins un bloc de coulissement (23) avec un trou fileté (231) pour permettre à un boulon de fixation (25) de pénétrer dans l'ouverture de fente (22) et un verrouillage de vis avec le trou fileté (231) du bloc de coulissement (23) ;
l'ensemble de bâti (3) fixé sur le fond de la plaque de base (2) comprend :
deux arbres de commande (32), chacun comprend un corps d'arbre (320) sur lequel s'étendent verticalement deux extrémités d'arbre (321) ; et
deux bâtis latéraux (31), chacun propose une partie de retenue (311) sur chacune de ses deux surfaces latérales, dans lequel la partie de retenue (311) fournit un trou (312) sur la surface supérieure et une rainure de calage (313) pour permettre l'insertion de l'ensemble de bloc de serrage (4) à l'intérieur de ce dernier; une rainure de serrage (314) est en outre fournie par la partie de retenue (311) sur la surface interne, dans lequel les deux rainures de serrage (314) sur les deux parties de retenue (311) des deux bâtis latéraux (31) forment ainsi un espace entre elles pour contenir et maintenir l'arbre de commande (32) ; la position de l'arbre de commande (32) est limitée par au moins une boucle souple (316) disposée au niveau de la surface intérieure (317) du bâti latéral (311) ; et
les ensembles de bloc de serrage (4) utilisés pour fixer la plaque de base (2) dans une position fixe en serrant et en maintenant une barre de support (51) d'un bâti de chargement de bicyclettes (5), comprenant :
une base de serrage (41) qui est un espace de réception (411) orienté vers le bas, fournissant un premier alésage de boulon (412) et une première ouverture de retenue d'extrémité d'arbre (413) à chacune de ses deux surfaces latérales (410), et un écrou de verrouillage (42) pénètre dans le premier alésage de boulon (412) pour se bloquer avec un boulon de verrouillage (43) ;
un corps de patin souple (45) placé à l'intérieur de l'espace de réception (411) de l'ensemble de bloc de serrage (4) ;
un composant de fixation (44) disposé à l'intérieur de l'espace de réception (411) de l'ensemble de bloc de serrage (4), et un second alésage de boulon (444) et une seconde ouverture de retenue d'extrémité d'arbre (445) sont disposés sur ce dernier, le second alésage de boulon (444) correspond au premier alésage de boulon (412) pour permettre la pénétration de l'écrou de blocage (42) et la seconde ouverture de retenue d'extrémité d'arbre (445) correspond à la première ouverture de retenue d'extrémité d'arbre (413) pour permettre l'insertion de l'extrémité d'arbre (321) de l'arbre de commande (32).

2. Elément de support détachable pour bâtis de chargement de bicyclettes (A) selon la revendication 1, dans lequel un capuchon d'obstruction (24) est inséré dans chacune des deux extrémités de la rainure de coulissement (21).

3. Elément de support détachable pour bâtis de chargement de bicyclettes (A) selon la revendication 1, dans lequel la boucle flexible (316) est placée entre les deux rainures de serrage (314).

4. Elément de support détachable pour bâtis de chargement de bicyclettes (A) selon la revendication 1, dans lequel la plaque de base (2) est assemblée de manière fixe au fond du support (6).

5. Elément de support détachable pour bâtis de chargement de bicyclettes (A) selon la revendication 1, dans lequel la plaque de base (2) est une partie de la section inférieure du support (6).

6. Elément de support détachable pour bâtis de chargement de bicyclettes (A) selon la revendication 1, dans lequel les deux bâtis latéraux (31) proposent chacun une ouverture (315) sur la surface extérieure (310).

7. Elément de support détachable pour bâtis de chargement de bicyclettes (A) selon la revendication 1, dans lequel un trou fileté (442) est disposé sur la surface supérieure du composant de fixation (44) pour permettre à un boulon de serrage (443) d'être vissé sur ce dernier et d'appuyer ensuite sur le corps de patin souple (45) pour se fixer sur la barre de support (51).
